# EUROPÄISCHE PATENTSCHRIFT

(11) **EP 0 989 456 B1**
(45) Veröffentlichungstag und Bekanntmachung des Hinweises auf die Patenterteilung: **29.12.2004**
(21) Anmeldenummer: 99116092.0
(22) Anmeldetag: 17.08.1999
(51) Int. Cl.: G03D 13/00

(54) **Spleiss zum Verbinden von zu bearbeitender, insbesondere zu entwickelnder oder zu vergrössernder Filme**
Splice tape to connect films to be treated in a developing apparatus or in a printer
Bande adhésive pour relier des films à traiter dans un appareil de développement ou dans une imprimante

(30) Priorität: 23.09.1998 DE 29817028 U
(43) Veröffentlichungstag der Anmeldung: 29.03.2000
(73) Patentinhaber: GFI Gesellschart für Informationssystem mbH, 57080 siegen (DE)
(72) Erfinder: Uloth, Peter, 57072 Siegen (DE)
(74) Vertreter: Grosse, Wolf-Dietrich, Dipl.-Ing.

(56) Entgegenhaltungen:
- US-A- 4 172 001
- US-A- 4 823 162
- PATENT ABSTRACTS OF JAPAN vol. 18, no. 674 (P-1846), 19. Dezember 1994 (1994-12-19) & JP 06 266060 A (FUJI PHOTO FILM CO.LTD.), 22. September 1994 (1994-09-22)

## Beschreibung

Die Erfindung betrifft einen Spleiß zum Verbinden von zu bearbeitenden Filmen zum Durchlauf von insbesondere Entwicklungs- und Fixierbädern sowie anschließenden Trockenprozessen und auch Kopier- und Vergrößerungsanordnungen, die als Filme bezeichnende Code aufnehmende flexible, einseitig eine Klebstoffschicht aufweisende Abschnitte eines Streifens ausgebildet sind.

Um einzelne Amateurfilme bis 35 mm in Filmgroßlaboren rationell bearbeiten zu können, werden sie formatgerecht zu entsprechenden Losgrößen oft bis über 100 Filmen miteinander zu Bändern verbunden. Dazu wird das Ende des einen Films mit dem Anfang des nächstfolgenden Films durch sog. Spleiße miteinander verklebt. Um die Filme zu identifizieren, können die Spleiße in die Verbindung bewirkenden Maschinen mit einem, meist forlaufenden Code bedruckt werden. Gleichzeitig werden zugehörige Auftragstaschen in dieser Maschine ebenfalls mit diesem Code versehen, um die Identität und ein kundenspezifisches Zuordnen der fertiggestellten Photoarbeiten zu sichern.

Üblicherweise werden die Spleiße aus Spezialpapier gefertigt, welches sich als sehr kostspielig erweist. Einerseits sollen sich die Spleiße leicht bedrucken lassen und andererseits soll die Druckfarbe in den folgenden Bearbeitungsstationen der Filme nicht verlaufen. Um ein Verlaufen der Druckfarbe zu vermeiden, werden die Spleiße teilweise durch Folien geschützt. Die Papierspleiße sollen sich auch in den chemischen Bädern als stabil erweisen und eine Zugfestigkeit besitzen, die einen sicheren Durchgang der Filme durch die nachfolgenden Stationen gewährleistet.

Es wurde auch schon vorgeschlagen, derartige Papierspleiße bereits vor ihrem Einsatz durch einen Strichcode, einen sogenannten Barcode zu bedrucken, welcher noch leichter maschinenlesbar ist. Vor bzw. bei der Verwendung dieser vorbereiteten Papierspleiße wird der Barcode abgelesen und auf zugehörige Auftragstaschen übertragen. Es zeigen sich jedoch auch hier die bekannten Mängel von Papierspleißen. In den Bädern wird der Aufdruck ausgelaugt. Zudem verläuft der Aufdruck und ist später nur durch erheblichen Aufwand zu entschlüsseln. Das Papier wird in Bezug auf seine Reißfestigkeit bis in Risikobereiche hin ausgelastet. Wegen der für die verlangte Reißfestigkeit erforderlichen hohen Stärke der Papierspleiße lassen Abstreifer an den Badübergängen unvorteilhaft auch Badflüssigkeit von einem Bad mit ins andere übertreten.

Das Verbinden bzw. das Spleißen erfolgt je nach Entwicklungsverfahren vor der Filmentwicklung oder nach der Entwicklung, d.h. es werden Filme unentwickelt bzw. auch entwickelte Filme zu Bändern verbunden. Nach dem Verbinden wird der Film zu Filmrollen aufgewickelt. Dabei hat sich herausgestellt, daß sich die sicherste Methode, Filme zu verbinden, durch ein hitzeaktivierbares Spleißband zu bewerkstelligen ist. Dieses hitzeaktivierbare Spleißband besteht aus dem oben erwähnten Papierspleiß und einem schwarz eingefärbten Kleber, der bei ca. 130 bis 170 °C schmilzt und seine Klebefähigkeit aktiviert.

Zur Erhöhung der Zugfestigkeit wurde der zu bedruckende bzw. der bereits bedruckte Papierspleiß in seiner Papierstärke vergrößert. Dies hat jedoch den Nachteil, daß die Spleißverbindung eine wesentliche Erhöhung zu der Filmebene erfährt und somit neben den oben erwähnten Nachteilen bei den Abstreifem auch bei der Rollenbildung einen Druck auf die darüber bzw. darunter liegende Filmschicht ausübt. Auch verschleißen die in den Durchlaufentwicklungsmaschinen eingesetzten Abstreifer an den durch die dicken Spleiße gegebenen Absätze schnell und verursachen eine Chemieverschleppung von Badflüssigkeit von einem Bad zum nächstfolgenden.

Auch wenn der Papierspleiß aus wasserabweisendem Spezialpapier gefertigt wird, hat dieser Spleiß den Nachteil, daß er bei Störungen in der Filmentwicklungsmaschine und einem eventuellen längeren Verweilen in den Entwicklungsbädem aufquillt und in einem gewissen Maß Feuchtigkeit aufnimmt. Die Folge eines derart aufgequollenen Spleißes mit noch größerer Materialstärke ist, daß nach der Bildung der Rollen die aufgenommene Feuchtigkeit seitlich aus den Rollen herausgequetscht wird und die Filmrollen beschädigt werden. Hinzu kommt, daß die Filmrollen regelmäßig wiederholt auf- und abgerollt werden, da sie durch verschiedene Bearbeitungsstationen laufen. Dabei werden die unerwünschten Druckstellen durch die stärkeren Spleiße an unterschiedlichen Teilen des aufgerollten. Filmes in diesen eingeprägt.

Die US 4,823,162 offenbart bereits Spleiße zum Verbinden von zu bearbeitenden Filmen, nach der ein Barcode während des Einsatzes der Spleiße auf diese aufgedruckt wird. Über die Art des Trägermaterials ist dieser Entgegenhaltung nichts zu entnehmen.

Die US 4,172,001 offenbart zwar bereits Spleiße aus Kunststoff, Kennzeichen wie Barcodes oder dergleichen sind nicht offenbart. Dagegen sind weitere Klebefolien notwendig, um die Stufen zwischen Film und Spleiß abzuschwächen, damit der Film problemlos beschichtet werden kann.

Die JP 06266060 offenbart ebenfalls aus Kunststoff bestehende Spleiße, die jedoch mit einem speziellen Klebstoff versehen sind, der ein Ablösen der Spleiße vom Film erlaubt, ohne dass Klebstoff am Film verbleibt. Kennzeichnungen der Spleiße, wie Barcodes werden nicht offenbart.

Die US 3 634 171 offenbart Papierspleiße, die einen Code aufweisen, und die mit einem Heißkleber versehen sind. Es wird auch offenbart, daß die Papierspleiße durch Kunststoffspleiße ersetzt werden können. In diesem Falle wird jedoch offenbart, daß ein anderer, nicht durch Hitze reagierenden Kleber verwendet werden muß, um das Heizelement, welches den Kunststoffspleiß verformen würde, eliminieren zu können.

Die Erfindung geht daher von der Aufgabe aus, Spleiße der vorgenannten Gattung zum Verbinden von Filmen für das Durchlaufen von Bädern zu schaffen, die den Badlösungen, auftretenden hohen Temperaturen sowie großen Zugspannungen gewachsen sind, Codebezeichnungen sicher fixiert aufzunehmen vermögen und Druckstellen im aufgewickelten Film weitestgehend vermeiden.

Gelöst wird diese Aufgabe durch die kennzeichnenden Merkmale des Patentanspruchs 1.

Die vorherige Kennzeichnung der Spleiße verlegt die Trocknung bzw. das Einziehen der Druckfarbe in ein vorgelagertes, beliebig lang gestaltbares Zeitintervall und die Verwendung von Kunststofffolien ergibt schon bei geringen Folienstärken auch beim Durchlaufen von chemischen Bädern sowohl ausreichende Reißfestigkeit als auch eine wünschenswerte geringe Affinität.

Vorteilhafte und erfinderische Weiterbildungen sind in den Unteransprüchen gekennzeichnet.

Im einzelnen sind die Merkmale der Erfindung anhand eines Ausführungsbeispiels in Verbindung mit dieses darstellenden Zeichnungen veranschaulicht.

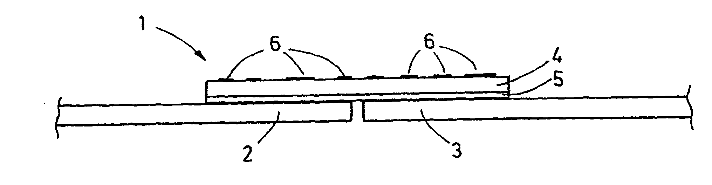

Die Figur zeigt in der Seitenansicht die durch einen Spleiß 1 verbundenen Enden zweier aufeinanderfolgender Filme 2, 3 in vergrößerter Darstellung.

Der Spleiß 1 weist bspw. für 35 mm Normalfilme eine Breite von ca. 15 bis 30 mm, vorzugsweise 25 mm auf und seine Länge beträgt ca. 25 bis 32 mm, vorzugsweise 30 mm. Das Trägermaterial des Spleißes 1 besteht aus einer hitzebeständigen Kunststofffolie 4 von etwa 0,01 bis 0,1 mm Stärke, vorzugsweise 0,75 mm Stärke. Die Unterseite der Kunststofffolie 4 ist mit einer Schicht eines Heißklebers 5 ausgestattet, dessen Konsistenz und/oder Farbe, ggfs. durch Beimengung von Farbpartikeln oder anderen optisch wirkenden Partikeln, derart gewählt sind, daß diese für Infrarotlicht sperrend wirkt, um bei nachfolgenden Bearbeitungsstationen das Filmende zu signalisieren.

Nach dem Bedrucken der Kunststofffolie 4 mit dem Barcode 6 mit auf dem Kunststoff haftenden oder ihn anlösenden Druckfarben wird das Trocknen und/oder das Verflüchtigen von Lösungsmitteln abgewartet bzw. die Druckfarbe durch Hitze fixiert, ehe die Reihe von Spleißen wahlweise als Kunststoffband oder aufgetrennt auf einem Papierträgerband aufgebracht und aufgerollt wird. Diese Rollen können bevorratet werden. Wegen des verwendeten dünnen Trägermaterials aus Kunststoff fassen diese Rollen erheblich mehr an Spleißen 1 als die bisherigen Rollen mit Papierspleißen. Das bedeutet, daß die Spleiß-Rolle in der nachgeordneten Maschine erst nach erheblich längerer Zeit gegenüber den bisherigen Papierspleißrollen auszutauschen ist, welches eine Reduzierung der bisherigen Rüstzeit bedeutet. Zum Einsatz werden sie in die zum Verbinden der Filme 2, 3 dienenden Maschinen gebracht, in denen ihr jeweiliger Barcode 6 abgelesen und auf eine zugehörige Auftragstasche gedruckt wird. Die Verbindung erfolgt mittels Heißstempeln. Die durch die Spleiße 1 verbundenen Filme 2, 3 können dann in Kassetten aufgewickelt werden, welche anschließend den Entwicklungs- sowie Kopier- bzw. Vergrößerungsmaschinen zugeführt werden. Bereits beim Aufwickeln der Filme in Kassetten macht sich die geringe Stärke des aus Kunststofffolie 4 bestehenden Spleißes 1 durch höhere Kapazitäten der Spulen vorteilhaft bemerkbar. Auch werden durch die geringen Stärken der Spleiße 1 Druckstellen in den Filmen 2, 3 vermieden.

Beim Durchlauf der Bäder zeigt sich vorteilhaft der völlige Ausfall von Reißern der Spleiße 1. Die Bäder bleiben länger chemiebeständig, da geringere Leckmengen durch den Filmdurchlauf von einem ins nächste Bad eingeschleppt werden. Beim Übertritt von einem Bad ins nächste wird am Film 2, 3 oberflächig haftende Flüssigkeit durch Schaber abgestreift oder durch Rollenpaare abgequetscht. Beim Durchlaufen üblicher Papierspleiße werden übliche Schaber oder Rollen stark angehoben, so daß insbesondere seitlich der Papierspleiße im Bereich der Transportperforation viel der anhaftenden Badflüssigkeit ins folgende Bad hinübergeschleppt wird. Bei den erfindungsgemäß dünnen Spleißen 1 werden Schaberkanten oder Rollen nur geringfügig angehoben, und entsprechend wenig Flüssigkeit wird ins nächste Bad geschleppt. Insbesondere bei Schabern ergibt der geringe Hub beim Durchlauf eines dünnen Kunststoff-Spleißes 1 auch einen geringen Verschleiß der Schaber, wodurch diese erheblich länger halten.

Auch bei den anschließenden Wässerungs-, Trocknungs- und Speicherprozessen, d. h. dem Aufrollen der bearbeitenden Filme, ergeben sich Vorteile. Es entfällt der als Flüssigkeitsspeicher bzw. -träger wirkende Papierspleiß, welcher jeweils noch mit der vorherigen Badflüssigkeit getränkt ist und den Trocknungsprozeß besonders schwierig gestaltet. Die erfindungsgemäßen Spleiße 1 zeichnen sich nicht nur dadurch aus, daß sie kein Wasser aufnehmen und dadurch nicht zu trocknen sind, der geringen Stärke wegen vermögen sie auch nicht, in den soeben getrockneten noch feuchten Filmen 2, 3 bei deren Aufwickeln Stufen einzuprägen, wie sie oft bei den aufgequollenen Papierspleißen unvorteilhaft in Erscheinung treten.

Nach Durchführen aller Prozesse wird das Film-Sammelband an den von Spleißen 1 bezeichneten Stellen aufgetrennt, und auch die einzelnen Filme 2, 3 werden in Abschnitte aufgetrennt und die Abschnitte in Kunststofftaschen eingegeben. Die Spleiße 1 erleichtern das Lösen der Verbindung der Filme 2,3, indem sie durch bestimmte Farben oder durch eine vorgegebene Transparenz auf sich aufmerksam machen.

Für den Kunststoff haben sich 0,075 mm bis 0,1 mm starke Folien eines Polyesters, insbesondere Polyäthylenteraftalat (TETP) oder Teflon bewährt.

Durch den auf den Spleiß aufgebrachten Datendruck wie z.B. Zahlendruck, Barcode, ZD-Code etc. wird die Druckfarbe auf den Kunststoffträger angelöst bzw. Farbpulver eingebrannt und wird somit besonders hitze- und chemiebeständig ausgerüstet. Auf jeden Fall ist der Barcode 6 nach Verlassen der Prozesse immer gestochen scharf und sauber, so daß bei dessen Auswertung keine Verwechslungen auftreten können.

## Patentansprüche

1. Spleiß zum Verbinden von zu bearbeitenden Filmen zum Durchlauf von insbesondere Entwicklungs- und Fixierbädern sowie anschließenden Trocknungsprozessen und auch Kopier- sowie Vergrößerungsanordnungen, der als flexibler einseitig eine Klebstoffschicht aufweisender Abschnitt eines Streifens ausgebildet ist, wobei dieser Abschnitt einen Film bezeichnenden Code aufnimmt,
**dadurch gekennzeichnet,**
**daß** es sich bei dem Klebstoff der Klebstoffschicht um einen Infrarotlichtsperrenden Heißkleber handelt, und daß das Trägermaterial des Spleißes (1) aus einer 0,01 bis 0,15 mm dünnen Folie (4) eines für den Heißklebevorgang hitzebeständigen, den beim Durchlauf der Bäder- auftretenden Zügen standhaltenden reißfesten Kunststoffs besteht, auf dem bereits vor dem Einsatz der erforderliche Barcode (6) aufgedruckt ist.

2. Spleiß nach Anspruch 1,
**dadurch gekennzeichnet,**
**daß** das Trägermaterial aus einer Polyesterfolie besteht.

3. Spleiß nach Anspruch 1 oder 2,
**dadurch gekennzeichnet,**
**daß** das Trägermaterial aus einer Polyäthylenteraftalat(TETP)- oder Teflon-Folie besteht.

4. Spleiß nach einem der Ansprüche 1 bis 3,
**gekennzeichnet durch**
eine Stärke der Kunststofffolie (4) von 0,075 mm.

5. Spleiß nach einem der Ansprüche 1 bis 4,
**dadurch gekennzeichnet,**
**daß** der Barcode (6) mittels auf dem Kunststoff haftender und/oder den Kunststoff anlösender, und/oder durch Wärme fixierbarer Druckfarbe auf dem Trägermaterial aufgebracht ist.

## Claims

1. A splice for joining films to be processed for feeding them in particular through developer and fixer baths and next through drying processes as well as copiers and enlargers, said splice being configured to be a flexible portion of a strip comprising an adhesive layer on one side thereof, said portion receiving a code designating a film,
**characterized in**
**that** the adhesive of the adhesive layer is a hot-melt adhesive that blocks infrared light and that the carrier material of the splice (1) consists of a 0.01 to 0.15 mm thin foil (4) made of a tear-resistant plastic material that resists the heat to which it is subjected during the heat sealing process as well as the tensions occurring during its passage through the baths, the required bar code (6) being printed onto said foil before it is utilized.

2. The splice in accordance with claim 1,
**characterized in**
**that** the carrier material consists of a polyester foil.

3. The splice in accordance with claim 1 or 2,
**characterized in**
**that** the carrier material consists of a polyethylene terephthalate (PETP) or Teflon foil.

4. The splice in accordance with one of the claims 1 through 3,
**characterized by**
a plastic foil (4) thickness of 0.075 mm.

5. The splice in accordance with one of the claims 1 through 4,
**characterized in**
**that** the bar code (6) is applied to the carrier material by means of a printing ink that adheres to the plastic material and/or slightly etches the plastic material and/or is heat fixable.

## Revendications

1. Epissure pour raccorder des films à traiter afin de les faire passer notamment dans des bains de développement et de fixage ainsi que par des processus de séchage et des dispositifs de copiage et d'agrandissement, ladite épissure étant conformée en forme de segment de bande flexible comportant sur l'une de ses faces une couche de colle, ce segment recevant un code désignant le film,
**caractérisée en ce**
**que** la colle de la couche de colle est un adhésif thermofusible formant barrière à la lumière infrarouge et que le support de l'épissure (1) est constitué d'une feuille (4) mince dont l'épaisseur est comprise entre 0,01 et 0,15 mm et qui est réalisée en une matière plastique tenace résistant à la chaleur à laquelle elle est soumise lors du thermocollage ainsi qu'aux tensions créées lors de son passage par les bains, le code barre (6) requis étant imprimé sur la feuille avant son utilisation.

2. Epissure selon la revendication 1,
**caractérisée en ce**
**que** le support est constitué d'une feuille en polyester.

3. Epissure selon la revendication 1 ou 2,
**caractérisée en ce**
**que** le support est constitué d'une feuille en polyéthylène téréphtalate (PETP) ou en téflon.

4. Epissure selon l'une quelconque des revendications 1 à 3,
**caractérisée par**
une épaisseur de feuille en plastique (4) de 0,075 mm.

5. Epissure selon l'une quelconque des revendications 1 à 4,
**caractérisée en ce que** le code barre (6) est appliqué sur le support au moyen d'une encre d'impression thermofixable et/ou adhérant à la matière plastique et/ou attaquant légèrement la matière plastique.
